# EUROPÄISCHE PATENTSCHRIFT

(11) **EP 2 668 087 B1**
(45) Veröffentlichungstag und Bekanntmachung des Hinweises auf die Patenterteilung: **15.04.2015**
(21) Anmeldenummer: 11791463.0
(22) Anmeldetag: 07.12.2011
(51) Int. Cl.: B62D 21/06, B62D 25/08, B62D 29/00, B62D 29/04

(54) **DIAGONALSTREBENVORRICHTUNG, VERFAHREN ZU IHRER HERSTELLUNG UND MITTELS DIAGONALSTREBENVORRICHTUNG VERSTÄRKTER KRAFTFAHRZEUGUNTERBODEN**
DIAGONAL STRUT DEVICE, METHOD FOR PRODUCING SAME, AND MOTOR VEHICLE UNDERCARRIAGE REINFORCED BY MEANS OF DIAGONAL STRUT DEVICE
DISPOSITIF DE CONTREFORTS EN DIAGONALE, SON PROCÉDÉ DE FABRICATION ET PLANCHER DE VÉHICULE AUTOMOBILE RENFORCÉ AU MOYEN DU DISPOSITIF DE CONTREFORT EN DIAGONALE

(30) Priorität: 26.01.2011 DE 102011009442
(43) Veröffentlichungstag der Anmeldung: 04.12.2013
(73) Patentinhaber: Daimler AG, 70327 Stuttgart (DE)
(72) Erfinder: ANDREE, Denis, 21037 Hamburg (DE); EIPPER, Konrad, 72108 Rottenburg (DE); RUDLAFF, Thomas, 70469 Stuttgart (DE); SALKIC, Asmir, 89077 Ulm (DE); SRETENOVIC, Mirko, 70178 Stuttgart (DE)
(74) Vertreter: JENSEN & SON
(86) Internationale Anmeldenummer: PCT/EP2011/006128
(87) Internationale Veröffentlichungsnummer: WO 2012/100797

(56) Entgegenhaltungen:
- EP-A2- 1 415 896
- WO-A1-2005/035334
- WO-A1-2005/066011
- WO-A1-2005/102824
- FR-A1- 2 798 354
- US-A1- 2005 248 113

## Beschreibung

Die Erfindung betrifft eine Diagonalstrebenvorrichtung zur aussteifenden Anordnung an einem Unterboden eines Kraftfahrzeugs. Ferner betrifft die Erfindung ein Verfahren zu der Herstellung der Diagonalstrebenvorrichtung sowie einen Kraftfahrzeugunterboden, in dem die Diagonalstrebenvorrichtung zum Einsatz kommt. Gattungsgemäße Vorrichtungen und Verfahren sind aus der gattungsgemäßen WO 2005/102824 A1, der US/2005/0248113 A1, der WO 2005/035334 A1 sowie der WO 2005/066011 A1 bekannt.

Diagonalstreben zur Anordnung am Unterboden eines Kraftfahrzeugs sind zur Erhöhung der Torsionssteifigkeit bekannt. Dies ist insbesondere bei Cabrios mit selbsttragender Karosserie aufgrund der fehlenden starren Dachstruktur wichtig. Über die Diagonalstreben werden Zug- und Druckkräfte von äußeren Randbereichen der Karosserie bis in einen weiter innen nahe einer vertikalen Fahrzeuglängsmittelebene liegenden Bereich beispielsweise über die Reserveradmulde eingeleitet. Diese Zug- und Druckkräfte entstehen durch unerwünschte Schwingungen und Verwindungen der Karosserie, die im Fahrbetrieb auftreten können, wodurch nachteilig Fahrsicherheit und -komfort beeinträchtigt werden und die Fahrzeugstruktur belastet wird.

So beschreibt die DE 10 2004 018 977 A1 ein Fahrzeug mit erweiterten Möglichkeiten des Strebenverlaufs und ihrer Anbindung an der Karosserie. Dazu weist das Fahrzeug vier aussteifende Streben auf, die an einem Verbindungsträger befestigt sind, der in der vertikalen Längsmittelebene des Fahrzeugs frei unter dem Unterboden und mit Abstand zu diesem angeordnet ist. Die Streben erstrecken sich von diesem Verbindungsträger weg und sind an ihren von dem Verbindungsträger abgewandten Enden an die Karosserie in deren Unterbodenbereich angebunden. Die Streben können aus Metall oder einem faserverstärkten Kunststoff gebildet sein.

Im Zuge der Leichtbauweise der Kraftfahrzeuge finden immer mehr Hybridbauelemente Verwendung, die unterschiedliche Materialien verbinden, beispielsweise Leichtmetallelemente mit faserverstärkten Kunststoffen. So offenbart die DE 698 36 259 T2 ein Leichtmetall/CFK-Bauelement, bei dem ein Kohlefaserkunststoffmaterial auf ein Leichtmetallmaterial mittels einer Haftschicht aufgeklebt ist, die ein Epoxyhaftmittel enthält und in einer Dicke von 10 bis 500 µm vorgesehen ist. Die Haftschicht soll zur Vermeidung von Kontaktkorrosion zwischen dem Kohlefasernkunststoffmaterial und dem Leichtmetallmaterial einen spezifischen Volumenwiderstand von mindestens 1·10¹³ Ω·cm und eine Haftfestigkeit bei Raumtemperatur von zumindest 15 MPa aufweisen.

Ausgehend von diesem Stand der Technik ergibt sich die Aufgabe, eine die Torsionssteifigkeit eines Kraftfahrzeugs erhöhende Diagonalstrebenvorrichtung zur Anordnung an einem Kraftfahrzeugunterboden bereitzustellen, die dem Leichtbaugedanken Rechnung trägt und damit hohe Zug- und Druckfestigkeit mit geringem Gewicht verbindet und einfach in wenigen Schritten gefertigt werden kann.

Diese Aufgabe wird durch eine Diagonalstrebenvorrichtung mit den Merkmalen des Anspruchs 1 gelöst. Weiterbildungen der Vorrichtung sind in den jeweiligen Unteransprüchen ausgeführt.

Die einfache und großserientaugliche Fertigung der Diagonalstrebenvorrichtung in wenigen Schritten wird durch das Verfahren mit den Merkmalen des Anspruchs 11 gelöst..

Ferner wird durch die Verwendung der Diagonalstrebenvorrichtung an dem Unterboden eines Kraftfahrzeugs gemäß den Merkmalen des Anspruchs 12 ein verbesserter Kraftfahrzeugunterboden offenbart.

Eine erste Ausführungsform einer erfindungsgemäßen Diagonalstrebenvorrichtung, die zur aussteifenden Anordnung an einem Unterboden eines Kraftfahrzeugs geeignet ist, bezieht sich darauf, dass die Diagonalstrebenvorrichtung mehrere Streben umfasst, die aus einem faserverstärkten Kunststoffverbundmaterial bestehen und die sich von einem Zentralknotenelement weg erstrecken. Die Diagonalstrebenvorrichtung kann über die von dem Zentralknotenelement abgewandten Enden der Streben an dem Unterboden angebunden werden. Dazu weist jede Strebe an ihrem von dem Zentralknotenelement abgewandten Ende ein erfindungsgemäßes Anbindungsknotenelement auf, das genau wie das Zentralknotenelement, aus einem Leichtmetallmaterial ausgeführt ist. Das Zentralknotenelement und die Anbindungsknotenelemente sind jeweils aus mehreren zusammengefügten Einzelelementen ausgebildet. Die Knotenelemente sind mit den Streben zumindest formschlüssig verbunden.

Die erfindungsgemäßen Leichtmetall-Knotenelemente führen zusammen mit den FVK-Streben vorteilhaft zu einem deutlich geringeren Gewicht der Aussteifungskonstruktion als die herkömmlich verwendeten Diagonalstreben aus Stahlmaterial.

Durch die fachwerkartige Konstruktion der Diagonalstrebenvorrichtung aus mehreren Streben, die einenends über einen Knoten verbunden sind und deren andere Enden an der Karosserie festlegbar sind, entstehen in den einzelnen FVK-Streben nur Zug- und Druckkräfte, wodurch die hohe Torsionssteifigkeit der Diagonalstrebenvorrichtung zu Stande kommt. Über diese können die Zug- und Druckkräfte, die an einem Kraftfahrzeugunterboden mit erfindungsgemäßer Diagonalstrebenvorrichtung vorliegen, in die Karosserie eingeleitet werden. Die Zentral- und Anbindungsknotenelemente sind erfindungsgemäß aus Einzelelementen zusammengefügt, welche formschlüssig mit den Streben verbunden sind, indem die Einzelelemente um die Streben angeordnet und dann zusammengefügt werden.

Das Zusammenfügen der Einzelelemente des Zentralknotenelementes und/oder der Anbindungsknotenelemente kann mittels Schweißen, Löten, Kleben oder anderer Verbindungstechniken erfolgen, insbesondere indem die Einzelelemente mittels Schrauben, Nieten, Nägel oder Keile miteinander verbunden werden.

Zudem können die Streben der Diagonalstrebenvorrichtung an ihren Endabschnitten Durchbrüche und/oder Strukturen aufweisen, die durch dazu passende Strukturen einzelner oder mehrerer Einzelelemente des Zentralknotenelementes und/oder der Anbindungsknotenelemente formschlüssig durchdrungen und/oder umgeben werden.

In einer weiteren Ausführungsform der erfindungsgemäßen Diagonalstrebenvorrichtung ist vorgesehen, dass die Streben zumindest an ihren Endabschnitten, an denen die Formschlußverbindung vorgesehen ist, mit einer aktivierbaren Klebstoff-Beschichtung versehen sind..Der Klebstoff kann z.B. mittels IR-, UV- oder anderer Bestrahlung aktivierbar sein. Diese Klebstoff-Beschichtung ermöglicht neben der Formschlussverbindung noch eine zusätzliche Stoffschlussverbindung zwischen der jeweiligen Strebe und dem jeweiligen Knotenelement und verstärkt somit die Diagonalstrebenvorrichtung.

Auch ist es denkbar, die Streben zumindest an ihren Endabschnitten mit einer haftverbessernden Beschichtung auszustatten, die beispielsweise eine strukturierte Oberfläche aufweist und somit eine mechanische Verklammerung eines Knotenelements mit dem jeweiligen Endabschnitt einer Strebe bewirkt.

Eine weitere erfindungsgemäße Ausführungsform der Diagonalstrebenvorrichtung bezieht sich darauf, dass die Diagonalstrebenvorrichtung Fügehilfsmittel aufweist, mittels derer sie einfacher an den Kraftfahrzeug-Unterboden, der gegebenenfalls korrespondierende Fügemittel aufweisen kann, gefügt werden kann. Die Fügehilfsmittel sind an den Anbindungsknotenelementen vorgesehen und es kann sich dabei um Bohrungen, Inserts, Gewinde, Klebeflächen, Clinchelemente und/oder Schweißflächen handeln.

Ferner kann die formschlüssige Verbindung der Streben mit dem Zentralknotenelement und den Anbindungsknotenelementen zusätzlich durch eine kraftschlüssige Verbindung, die durch die Verwendung von Nieten oder Schrauben erreicht werden kann, verstärkt werden, die die Anbindung eines jeweiligen Elements an den Streben sichert.

Die Streben der Diagonalstrebenvorrichtung können FVK-Pultrusionsprofile sein, die insbesondere einen Faseranteil von bis zu 70 %, bezogen auf das Gesamtgewicht der Profile, und damit eine hohe Zug- und Druckfestigkeit aufweisen können.

Bevorzugt wird die Diagonalstrebenvorrichtung aus bis zu vier Streben gebildet. In einer besonderen Ausführungsform wird die Diagonalstrebenvorrichtung aus vier Streben gebildet, die X-förmig an dem Zentralknotenelement angeordnet sind. Bei einer solchen Diagonalstrebenvorrichtung, aber auch bei hinsichtlich der Strebenanzahl oder -anordnung anders ausgeführten Diagonalstrebenvorrichtungen, können die Streben in Bezug zueinander geneigt an dem Zentralknotenelement angeordnet sein, so dass das Zentralknotenelement von der Ebene, die die an den anderen Enden der Streben befindlichen Anbindungselemente aufspannen, beabstandet ist. Diese Beabstandung ermöglicht auch die Anbringung der Diagonalstrebenvorrichtung an einem Unterboden mit schwierigen Karosserieverhältnissen.

Bei dem Leichtmetallmaterial zur Bildung der Knotenelemente handelt es sich um ein Leichtmetall oder eine Leichtmetalllegierung wie Aluminium oder Magnesium beziehungsweise deren Legierungen beispielsweise mit Silicium.

Ein erfindungsgemäßes Herstellungsverfahren für die Diagonalstrebenvorrichtung umfasst die Schritte:
- Bereitstellen einer Mehrzahl an Streben aus einem faserverstärkten Kunststoffverbundmaterial,
- Bereitstellen einer Mehrzahl von Einzelelementen, welche zu einem Zentralknotenelement und zu Anbindungsknotenelementen zusammenfügbar sind"
- Anordnen der Streben derart, dass sie mit jeweils einem ersten Endabschnitt nahe zueinander in einem zur Ausbildung des Zentralknotenelements vorgesehenen Bereich und mit ihren zweiten Endabschnitten beabstandet voneinander in jeweils einem zur Ausbildung der Anbindungsknotenelemente vorgesehenen Bereich zu liegen kommen,
- Anordnen jeweils mehrerer Einzelelementen um die Endabschnitte der Streben,
- Zusammenfügen dieser Einzelelemente derart, dass sie ein Zentralknotenelement und Anbindungsknotenelemente ausbilden, welche zumindest formschlüssig mit den Endabschnitten der Streben verbunden werden.

Das Herstellungsverfahren erfordert vorteilhaft lediglich das Einlegen der FVK-Streben in die Einzelelemente der Knotenelemente sowie deren Zusammenfügen und ist daher einfach und effizient auszuführen. Weitere Schritte zum Zusammenfügen der Zentral- und Anbindungsknotenelemente mit den Streben entfallen.

Die erfindungsgemäße Diagonalstrebenvorrichtung eignet sich zur aussteifenden Anordnung an einem Unterboden eines Kraftfahrzeugs, wobei das Zentralknotenelement der Diagonalstrebenvorrichtung unter dem Unterboden in einer vertikalen Längsmittelebene des Kraftfahrzeugs angeordnet wird und die Diagonalstrebenvorrichtung mittels der Anbindungsknotenelemente mit dem Unterboden in der Montage oder im Rohbau vernietet, verschraubt, geklebt, geclincht und/oder verschweißt wird.

Diese und weitere Vorteile werden durch die nachfolgende Beschreibung eines Ausführungsbeispiels unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

Dabei zeigt:

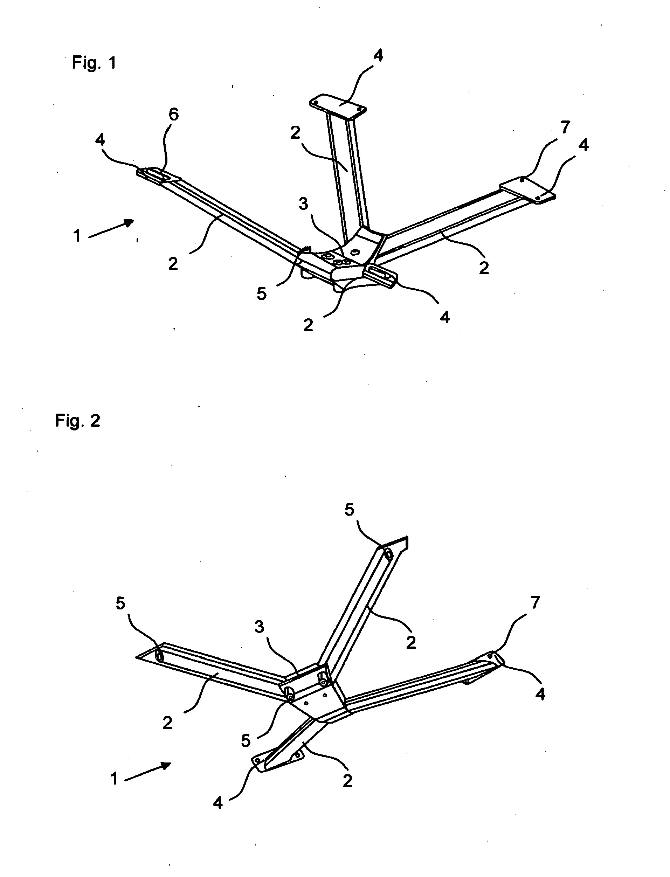

- Fig. 1: eine perspektivische Draufsicht einer erfindungsgemäßen Ausführungsform der Diagonalstrebenvorrichtung,
- Fig. 2: eine perspektivische Ansicht von unten auf eine erfindungsgemäße Ausführungsform der Diagonalstrebenvorrichtung.

Die erfindungsgemäße Diagonalstrebenvorrichtung bezieht sich auf eine beispielhaft in den Figuren dargestellte sogenannte Fachwerkskonstruktion.

Die Diagonalstrebenvorrichtung 1 besteht aus vier pultrudierten FVK-Profilstreben 2, die über einen zentralen zusammengefügten Leichtmetallknoten 3 miteinander verbunden sind. Selbstverständlich ist eine andere Strebenanzahl, etwa sechs Streben, möglich. Die zur Anbindung an einen Kraftfahrzeug-Unterbau vorgesehenen zusammengefügten Anbindungsknotenelemente 4 bestehen ebenfalls aus einem Leichtmetallmaterial. Die so gestaltete Diagonalstrebenvorrichtung 1 kann am Unterboden in der Montage oder auch schon im Rohbau befestigt werden. Dies wird durch die zusammengefügten Anbindungsknotenelemente 4 ermöglicht, die dazu entsprechende Fügehilfsmittel aufweisen können.

Durch den Einsatz eines Leichtmetallmaterials zur Schaffung der Knoten 3, 4 kann der Gewichtsvorteil der FVK-Streben 2 erhalten bleiben. Leichtmetallmaterialien sind Leichtmetalle und Legierungen mit einer Dichte unter 5 g/cm³. Vor allem Aluminium, Magnesium, Titan sowie in geringem Umfang Beryllium und Lithium finden technischen Einsatz. Sowohl für Aluminium- als auch Magnesiumlegierungen lassen sich im Druckguss Bauteile endabmessungsnah ohne kostenintensive Nachbearbeitung fertigen. Eine spanende Nachbearbeitung ist möglich.

Die in den Figuren gezeigte Diagonalstrebenvorrichtung 1 kann zur Aussteifung der Karosserie an einem Unterboden eines Kraftfahrzeugs angeordnet werden, wobei das Zentralknotenelement 3 der Diagonalstrebenvorrichtung 1 unter dem Unterboden in einer vertikalen Längsmittelebene des Kraftfahrzeugs angeordnet wird und die Diagonalstrebenvorrichtung 1 mittels der Anbindungsknotenelemente 4 mit dem Unterboden in der Montage oder im Rohbau vernietet, verschraubt, geklebt, geclincht und/oder verschweißt wird.

Die Diagonalstrebenvorrichtung 1 in den Figuren weist vier Streben 2 aus einem faserverstärkten Kunststoffverbundmaterial auf, bei denen es sich um FVK-Pultrusionsprofile 2 handelt, die einen Faseranteil bis zu 70 % haben können und die sich von dem Zentralknotenelement 3 X-förmig und geneigt weg erstrecken, so dass die von dem Zentralknotenelement 3 abgewandten Enden der Streben 2, an denen die Anbindungsknotenelemente 4 vorliegen, eine Ebene aufspannen, die von dem Zentralknotenelement 3 beabstandet ist.

Dadurch, dass die Knotenelemente 3,4 um die Endabschnitte der Streben 2 zusammengefügt sind, wird eine formschlüssige Verbindung bereitgestellt. Die zusammengefügten Einzelelemente des Zentralknotenelementes 3 und/oder der Anbindungsknotenelemente 4 sind z.B. geschweißt, gelötet oder geklebt oder durch zusätzliche Verbindungselemente wie Schrauben, Niete, Nägel oder Keile miteinander verbunden.

Die formschlüssige Verbindung zwischen einer Strebe 2 und einem Knotenelement 3,4 kann durch Durchbrüche und/oder Strukturen verstärkt werden, die die Streben 2 an ihren Endabschnitten aufweisen können und die durch dazu passende Strukturen einzelner oder mehrerer Einzelelemente des Zentralknotenelementes 3 und/oder der Anbindungsknotenelemente 4 formschlüssig durchdrungen und/oder umgeben werden.

Außerdem können die Streben zumindest an ihren Endabschnitten, an denen die Formschlußverbindung vorgesehen ist, mit einer aktivierbaren Klebstoff-Beschichtung versehen werden. Der Klebstoff kann z.B. mittels IR-, UV- oder anderer Bestrahlung aktivierbar sein. Diese Klebstoff-Beschichtung ermöglicht neben der Formschlussverbindung noch eine zusätzliche Stoffschlussverbindung zwischen der jeweiligen Strebe und dem jeweiligen Knotenelement und verstärkt somit die Diagonalstrebenvorrichtung.

Diagonalstrebenvorrichtung (1) nach zumindest einem der Ansprüche 1 bis 4, dadurch gekennzeichnet, dass die Streben (2) zumindest an ihren Endabschnitten, an denen die Formschlußverbindung vorgesehen ist, mit einer haftverbessernden Beschichtung versehen sind, die insbesondere eine strukturierte Oberfläche bereitstellt.

Eine Beschichtung der Endabschnitte der Streben 2 kann auch zur Haftverbesserung beitragen, indem die Beschichtung eine strukturierte Oberfläche bereitstellt, die eine zusätzliche mechanische Verklammerung der mit den Streben 2 formschlüssig verbundenen Knotenelemente erlaubt.

Die Anbindungsknotenelemente 4 weisen gegebenenfalls Fügehilfsmittel auf, mittels derer die Diagonalstrebenvorrichtung 1 leicht an einen Unterboden gefügt werden kann, der in diesem Falle den Anbindungsknotenelementen 4 entsprechende Fügestellen aufweisen sollte. Als Fügehilfsmittel kommen Bohrungen 7 oder Inserts, mit oder ohne Gewinde in den Anbindungsknotenelementen 4 in Frage, die ein Fügen mit Nieten oder Schrauben gestatten. Denkbar ist aber auch, dass die Anbindungsknotenelemente 4 zum Kleben oder Schweißen vorgesehene Flächen bereitstellen. Eine andere Fügemöglichkeit für die Anbindungsknotenelemente 4 liegt in der Ausbildung von Clinchelementen 6, die eine druckknopfähnliche Form aufweisen und mit einem korrespondierenden Gegenelement (an dem Unterboden) eine form- und kraftschlüssige Verbindung eingehen.

Die verschiedenen Anbindungsknotenelemente 4 einer Diagonalstrebenvorrichtung 1 können dabei unterschiedliche Fügehilfsmittel aufweisen.

Das Zentralknotenelement 3 oder die Anbindungsknotenelemente 4 oder beide können zusätzlich durch eine kraftschlüssige Verbindung wie mittels Nieten oder Schrauben 5 mit den Streben 2 verbunden sein.

Zur Herstellung der Diagonalstrebenvorrichtung 1 werden die benötigten FVK-Streben 2 vorzugsweise durch Pultrusion hergestellt. Die benötigten Einzelelemente, welche zu einem Zentralknotenelement 3 und zu Anbindungsknotenelementen 4 zusammenfügbar sind, werden aus einem Leichmetall hergestellt, insbesondere gegossen. Die Streben 2 werden derart angeordnet, dass sie mit jeweils einem ersten Endabschnitt nahe zueinander in einem zur Ausbildung des Zentralknotenelements 3 vorgesehenen Bereich und mit ihren zweiten Endabschnitten beabstandet voneinander in jeweils einem zur Ausbildung der Anbindungsknotenelemente 4 vorgesehenen Bereich zu liegen kommen. Danach werden jeweils mehrere Einzelelemente um die Endabschnitte der Streben 2 derart angeordnet und dann zusammengefügt, dass sie ein Zentralknotenelement 3 und Anbindungsknotenelemente 4 ausbilden, welche zumindest formschlüssig mit den Endabschnitten der Streben 2 verbunden werden.

Die Diagonalstrebenvorrichtung 1 ist besonders geeignet für einen Kraftfahrzeugunterboden. Dieser ist der durch die Diagonalstrebenvorrichtung 1 ausgesteift ist, die an dem Kraftfahrzeugunterboden angeordnet ist, indem die Diagonalstrebenvorrichtung eine Mehrzahl von Streben 2 aus einem faserverstärkten Kunststoffverbundmaterial umfasst, die sich von einem Zentralknotenelement 3 weg erstrecken, wobei jede Strebe 2 über ihr von dem Zentralknotenelement 3 abgewandtes Ende an dem Unterboden angebunden ist, wobei ein Anbindungsknotenelement 4 an dem von dem Zentralknotenelement 3 abgewandten Ende jeder Strebe 2 angeordnet und die Anbindung mit dem Unterboden unlösbar bereitstellt, und dass das Zentralknotenelement 3 und die Anbindungsknotenelemente 4 aus einem Leichtmetallmaterial ausgeführt und durch eine zumindest formschlüssige Verbindung mit den Streben 2 verbunden sind, wobei das Zentralknotenelement 3 und die Anbindungsknotenelemente 4 jeweils aus mehreren zusammengefügten Einzelelementen ausgebildet sind.

## Patentansprüche

1. Diagonalstrebenvorrichtung (1)
zur aussteifenden Anordnung an einem Unterboden eines Kraftfahrzeugs, wobei die Diagonalstrebenvorrichtung (1) eine Mehrzahl von Streben (2) aus einem faserverstärkten Kunststoffverbundmaterial umfasst,
die sich von einem Zentralknotenelement (3) weg erstrecken,
wobei jede Strebe (2) über ihr von dem Zentralknotenelement (3) abgewandtes Ende an dem Unterboden anbindbar ist,
wobei
ein Anbindungsknotenelement (4) an dem von dem Zentralknotenelement (3) abgewandten Ende jeder Strebe (2) zur Bereitstellung der Anbindung an dem Unterboden angeordnet ist, und wobei das Zentralknotenelement (3) und die Anbindungsknotenelemente durch eine zumindest formschlüssige Verbindung mit den Streben (2) verbunden sind **dadurch gekennzeichnet, dass**
das Zentralknotenelement (3) und die Anbindungsknotenelemente (4) aus einem Leichtmetallmaterial ausgeführt sind, und
dass das Zentralknotenelement (3) und die Anbindungsknotenelemente (4) jeweils aus mehreren zusammengefügten Einzelelementen ausgebildet sind.

2. Diagonalstrebenvorrichtung (1) nach Anspruch 1,
**dadurch gekennzeichnet, dass**
die zusammengefügten Einzelelemente des Zentralknotenelementes (3) und/oder der Anbindungsknotenelemente (4) geschweißt, gelötet oder geklebt sind oder durch zusätzliche Verbindungselemente wie Schrauben, Niete, Nägel oder Keile miteinander verbunden sind.

3. Diagonalstrebenvorrichtung (1) nach Anspruch 1 oder 2,
**dadurch gekennzeichnet, dass**
die Streben (2) an ihren Endabschnitten Durchbrüche und/oder Strukturen aufweisen, die durch dazu passende Strukturen einzelner oder mehrerer Einzelelemente des Zentralknotenelementes (3) und/oder der Anbindungsknotenelemente (4) formschlüssig durchdrungen und/oder umgeben werden.

4. Diagonalstrebenvorrichtung (1) nach zumindest einem der Ansprüche 1 bis 3,
**dadurch gekennzeichnet, dass**
die Streben (2) zumindest an ihren Endabschnitten, an denen die Formschlußverbindung vorgesehen ist, mit einer aktivierbaren Klebstoff-Beschichtung versehen sind.

5. Diagonalstrebenvorrichtung (1) nach zumindest einem der Ansprüche 1 bis 4,
**dadurch gekennzeichnet, dass**
die Streben (2) zumindest an ihren Endabschnitten, an denen die Formschlußverbindung vorgesehen ist, mit einer haftverbessernden Beschichtung versehen sind, die insbesondere eine strukturierte Oberfläche bereitstellt.

6. Diagonalstrebenvorrichtung (1) nach zumindest einem der Ansprüche 1 bis 5,
**dadurch gekennzeichnet, dass**
die Diagonalstrebenvorrichtung (1) Fügehilfsmittel aufweist, mittels derer die Diagonalstrebenvorrichtung (1) an den Unterboden fügbar ist, wobei die Fügehilfsmittel an den Anbindungsknotenelementen (4) vorgesehen sind und Bohrungen, Inserts, Gewinde, Klebeflächen, Clinchelemente und/oder Schweißflächen umfassen.

7. Diagonalstrebenvorrichtung (1) nach zumindest einem der Ansprüche 1 bis 6,
**dadurch gekennzeichnet, dass**
dass das Zentralknotenelement (3) und/oder die Anbindungsknotenelemente (4) zusätzlich durch eine kraftschlüssige Verbindung insbesondere durch Nieten oder Schrauben (5) mit den Streben (2) verbunden sind.

8. Diagonalstrebenvorrichtung (1) nach zumindest einem der Ansprüche 1 bis 7,
**dadurch gekennzeichnet, dass**
die Streben (2) FVK-Pultrusionsprofile (2), insbesondere mit einem Faseranteil bis zu 70 %, bezogen auf das Gesamtgewicht des FVK-Pultrusionsprofils (2), sind.

9. Diagonalstrebenvorrichtung (1) nach zumindest einem der Ansprüche 1 bis 8,
**dadurch gekennzeichnet, dass**
die Diagonalstrebenvorrichtung (1) bis zu vier Streben (2) umfasst, die insbesondere X-förmig an dem Zentralknotenelement (3) angeordnet sind, und/oder die in Bezug zueinander geneigt an dem Zentralknotenelement (3) angeordnet sind, so dass das Zentralknotenelement (3) von einer Ebene, die die Anbindungselemente (4) aufspannen, beabstandet ist.

10. Diagonalstrebenvorrichtung (1) nach zumindest einem der Ansprüche 1 bis 9,
**dadurch gekennzeichnet, dass**
das Leichtmetallmaterial ein Leichtmetall oder eine Leichtmetalllegierung ist, insbesondere eine Aluminium- oder Magnesium-Legierung.

11. Verfahren zur Herstellung einer Diagonalstrebenvorrichtung (1) nach zumindest einem der Ansprüche 1 bis 10,
umfassend die Schritte:
- Bereitstellen einer Mehrzahl an Streben (2) aus einem faserverstärkten Kunststoffverbundmaterial,
- Bereitstellen einer Mehrzahl von Einzelelementen, welche zu einem Zentralknotenelement (3) und zu Anbindungsknotenelemente (4) zusammenfügbar sind,
- Anordnen der Streben (2) derart, dass sie mit jeweils einem ersten Endabschnitt nahe zueinander in einem zur Ausbildung des Zentralknotenelements (3) vorgesehenen Bereich und mit ihren zweiten Endabschnitten beabstandet voneinander in jeweils einem zur Ausbildung der Anbindungsknotenelemente (4) vorgesehenen Bereich zu liegen kommen,
**gekennzeichnet durch** die zusätzlichen Schritte:
- Anordnen jeweils mehrerer Einzelelementen um die Endabschnitte der Streben (2),
- Zusammenfügen dieser Einzelelemente derart, dass sie ein Zentralknotenelement (3) und Anbindungsknotenelemente (4) ausbilden, welche zumindest formschlüssig mit den Endabschnitten der Streben (2) verbunden sind.

12. Diagonalstrebenvorrichtung nach Anspruch 1,
die an einem Kraftfahrzeugunterboden aussteifend angeordnet ist,
indem die Diagonalstrebenvorrichtung eine Mehrzahl von Streben (2) aus einem faserverstärkten Kunststoffverbundmaterial umfasst,
die sich von einem Zentralknotenelement (3) weg erstrecken,
wobei jede Strebe (2) über ihr von dem Zentralknotenelement (3) abgewandtes Ende an dem Unterboden angebunden ist,
**dadurch gekennzeichnet, dass**
ein Anbindungsknotenelement (4) an dem von dem Zentralknotenelement (3) abgewandten Ende jeder Strebe (2) angeordnet und die Anbindung mit dem Unterboden unlösbar bereitstellt, und
dass das Zentralknotenelement (3) und die Anbindungsknotenelemente (4) aus einem Leichtmetallmaterial ausgeführt und durch eine zumindest formschlüssige Verbindung mit den Streben (2) verbunden sind,
wobei das Zentralknotenelement (3) und die Anbindungsknotenelemente (4) jeweils aus mehreren zusammengefügten Einzelelementen ausgebildet sind.

## Claims

1. Diagonal strut device (1)
for arrangement on an undercarriage of a motor vehicle in a reinforcing manner,
wherein the diagonal strut device (1) comprises a plurality of struts (2) made from a fibre-reinforced plastic composite material,
said struts (2) extending away from a central node element (3),
wherein each strut (2) can be attached to the undercarriage via its end facing away from the central node element (3),
wherein
an attachment node element (4) is arranged at the end of each strut (2) facing away from the central node element (3) in order to provide the attachment to the undercarriage, and wherein the central node element (3) and the attachment node elements are connected to the struts (2) by an at least positive-locking connection,
**characterised in that**
the central node element (3) and the attachment node elements (4) are made from a light metal material, and
the central node element (3) and the attachment node elements (4) are each formed from a plurality of individual elements joined together.

2. Diagonal strut device (1) according to claim 1,
**characterised in that**
the joined-together individual elements of the central node element (3) and / or of the attachment node elements (4) are welded, soldered or bonded, or connected to each other through additional connecting elements such as screws, rivets, nails or wedges.

3. Diagonal strut device (1) according to claim 1 or 2,
**characterised in that**
the struts (2) have breaks and / or structures at their end portions which are penetrated in a positive-locking way and / or surrounded by structures, adapted thereto, of individual or a plurality of individual elements of the central node element (3) and / or of the attachment node elements (4).

4. Diagonal strut device (1) according to at least one of claims 1 to 3,
**characterised in that**
the struts (2) are provided at least at their end portions, at which the positive-locking connection is provided, with an adhesive coating that can be activated.

5. Diagonal strut device (1) according to at least one of claims 1 to 4,
**characterised in that**
the struts (2) are provided at least at their end portions, at which the positive-locking connection is provided, with an adhesion-improving coating which in particular provides a structured surface.

6. Diagonal strut device (1) according to at least one of claims 1 to 5,
**characterised in that**
the diagonal strut device (1) has joining aids, by means of which the diagonal strut device (1) can be joined to the undercarriage, wherein the joining aids are provided at the attachment node elements (4) and comprise holes, inserts, threads, adhesive surfaces, clinch elements and / or welding surfaces.

7. Diagonal strut device (1) according to at least one of claims 1 to 6,
**characterised in that**
the central node element (3) and / or the attachment node elements (4) are additionally connected to the struts (2) by a force-locking connection, in particular by rivets or screws (5).

8. Diagonal strut device (1) according to at least one of claims 1 to 7,
**characterised in that**
the struts (2) are FRP pultrusion profiles (2), in particular with a fibre portion of up to 70% with respect to the total weight of the FRP pultrusion profile (2).

9. Diagonal strut device (1) according to at least one of claims 1 to 8,
**characterised in that**
the diagonal strut device (1) comprises up to four struts (2) which are arranged in particular in an X-shaped manner at the central node element (3), and / or which are arranged inclined relative to each other at the central node element (3) so that the central node element (3) is spaced apart from a plane, over which the attachment elements (4) span.

10. Diagonal strut device (1) according to at least one of claims 1 to 9,
**characterised in that**
the light metal material is a light metal or a light metal alloy, in particular an aluminium or magnesium alloy.

11. Method for producing a diagonal strut device (1) according to at least one of claims 1 to 10,
comprising the steps:
- providing a plurality of struts (2) made from a fibre-reinforced plastic composite material,
- providing a plurality of individual elements which can be joined together to form a central node element (3) and attachment node elements (4),
- arranging the struts (2) so that they come to lie close to each other with a respective first end portion in a region provided for the formation of the central node element (3) and spaced apart from each other with their second end portions in a respective region provided for the formation of the attachment node elements (4),
**characterised by** the additional steps:
- arranging each of a plurality of individual elements around the end portions of the struts (2),
- joining these individual elements together in such a way that they form a central node element (3) and attachment node elements (4) which are connected at least in a positive-locking manner to the end portions of the struts (2).

12. Diagonal strut device according to claim 1,
which is arranged on a motor vehicle undercarriage in a reinforcing manner,
insofar as the diagonal strut device comprises a plurality of struts (2) made from a fibre-reinforced plastic composite material,
said struts (2) extending away from a central node element (3),
wherein each strut (2) is attached to the undercarriage via its end facing away from the central node element (3),
**characterised in that**
an attachment node element (4) is arranged at the end of each strut (2) facing away from the central node element (3) and provides the non-detachable attachment with the undercarriage, and
the central node element (3) and the attachment node elements (4) are made from a light metal material and connected to the struts (2) by an at least positive-locking connection,
wherein the central node element (3) and the attachment node elements (4) are each formed from a plurality of individual elements joined together.

## Revendications

1. Système de traverses diagonales (1) destiné à être agencé sur un dessous de caisse d'un véhicule automobile de manière à le renforcer, ledit système de traverses diagonales (1) comprenant une pluralité de traverses (2) qui sont constituées d'un matériau composite plastique renforcé par des fibres et s'étendent à partir d'un élément noeud central (3), chaque traverse (2) pouvant être fixée au dessous de caisse par l'intermédiaire de son extrémité opposée à l'élément noeud central (3), un élément noeud de liaison (4) étant agencé à l'extrémité de chaque traverse (2) opposée à l'élément noeud central (3) pour préparer la fixation sur le dessous de caisse, et l'élément noeud central (3) et l'élément noeud de liaison (4) étant reliés par une liaison au moins par complémentarité de force aux traverses (2), **caractérisé en ce que** l'élément noeud central (3) et les éléments noeuds de liaison (4) sont conçus à partir de plusieurs éléments individuels assemblés.

2. Système de traverses diagonales (1) selon la revendication 1, **caractérisé en ce que** les éléments individuels assemblés de l'élément noeud central (3) et/ou des éléments noeuds de liaison (4) sont soudés, brasés ou collés ou reliées ensemble par d'autres éléments de liaison comme des vis, des rivets, des clous ou des clavettes.

3. Système de traverses diagonales (1) selon la revendication 1 ou la revendication 2, **caractérisé en ce que** les traverses (2) présentent sur leurs sections d'extrémité des passages et/ou des structures que pénètrent et/ou entourent des structures adaptées de chaque élément individuel ou de plusieurs éléments individuels de l'élément noeud central (3) et/ou des éléments noeuds de liaison (4) par complémentarité de forme.

4. Système de traverses diagonales (1) selon au moins l'une quelconque des revendications 1 à 3, **caractérisé en ce que** les traverses (2) au moins sur leurs sections d'extrémité, sur lesquelles la liaison par complémentarité de forme est prévue, sont dotées d'un revêtement adhésif pouvant être activé.

5. Système de traverses diagonales (1) selon au moins l'une quelconque des revendications 1 à 4, **caractérisé en ce que** les traverses (2) au moins sur leurs sections d'extrémité, sur lesquelles la liaison par complémentarité de forme est prévue, sont dotées d'un revêtement permettant d'améliorer l'adhérence, qui fournit notamment une surface structurée.

6. Système de traverses diagonales (1) selon au moins l'une quelconque des revendications 1 à 5, **caractérisé en ce que** le dispositif de traverses diagonales (1) présente des moyens auxiliaires d'assemblage, qui permettent d'assembler le système de traverses diagonales (1) au dessous de caisse, les moyens auxiliaires d'assemblage étant disposés sur les éléments noeud de liaison (4) et comprennent des alésages, des inserts, des filetages, des faces de collage, des éléments d'engorgement et/ou des faces de soudage.

7. Système de traverses diagonales (1) selon au moins l'une des revendications 1 à 6, **caractérisé en ce que** l'élément noeud central (3) et/ou les éléments noeud de fixation (4) sont reliés en outre par une liaison de force en particulier par des rivets ou des vis (5) aux traverses (2).

8. Système de traverses diagonales (1) selon au moins l'une quelconque des revendications 1 à 7, **caractérisé en ce que** les traverses (2) sont des profilés de pultrusion FVK (2), en particulier ayant une teneur en fibres inférieure ou égale à 70 % par rapport au poids total du profilé de pultrusion FVK (2).

9. Système de traverses diagonales (1) selon au moins l'une quelconque des revendications 1 à 8, **caractérisé en ce que** le dispositif de traverses diagonales (1) comprend quatre traverses (2) au plus qui sont disposées notamment en X sur l'élément noeud central (3) et/ou qui sont disposées de manière inclinées les unes par rapport aux autres sur l'élément noeud central (3) de manière que l'élément noeud central (3) soit éloigné d'un plan que fixent les éléments de liaison (4).

10. Système de traverses diagonales (1) selon au moins l'une quelconque des revendications 1 à 9, **caractérisé en ce que** le matériau en métal léger est un métal léger ou un alliage de métal léger, en particulier un alliage d'aluminium ou de magnésium.

11. Procédé de fabrication d'un système de traverses diagonales (1) selon au moins l'une quelconque des revendications 1 à 10, comprenant les étapes suivantes :
- préparer une pluralité de traverses (2) en matériau composite plastique renforcé par des fibres,
- préparer une pluralité d'éléments individuels qui peuvent être assemblés à un élément noeud central (3) et aux éléments noeuds de liaison (4),
- disposer les traverses (2) de manière qu'elle viennent se placer, dotées chacune d'une première section d'extrémité, à proximité des unes des autres dans une zone destinée à former l'élément noeud central (3) et qu'elle s'éloignent, dotées de leurs secondes sections d'extrémité, les unes des autres dans une zone destinée à former des éléments noeud de liaison (4), **caractérisé par** les étapes supplémentaires :
- disposer chacun élément individuel parmi la pluralité d'éléments individuels autour des sections d'extrémité des traverses (2),
- assembler lesdits éléments individuels de manière qu'ils forment un élément noeud central (3) et des éléments noeud de fixation (4) qui sont reliés au moins par complémentarité de forme aux sections d'extrémité des traverses (2).

12. Système de traverses diagonales (1) selon la revendication 1, destiné à être agencé sur un dessous de caisse d'un véhicule automobile, ledit système de traverses diagonales comprenant une pluralité de traverses (2) qui sont constituées d'un matériau composite plastique renforcé par des fibres, lesdites traverses s'étendant à partir d'un élément noeud central (3), chaque traverse (2) pouvant être reliée au dessous de caisse par l'intermédiaire de son extrémité opposée à l'élément noeud central (3), **caractérisé en ce qu'**un élément noeud de liaison (4) est disposé à l'extrémité de chaque traverse (2) opposée à l'élément noeud central (3), et prépare la liaison au dessous de caisse, et **en ce que** l'élément noeud central (3) et les éléments noeud de liaison (4) sont constitués d'un matériau métallique léger, et sont reliés aux traverses (2) par une liaison au moins par complémentarité de forme, l'élément noeud central (3) et les éléments noeuds de liaison (4) étant formés à chaque fois par plusieurs éléments individuels assemblés.
